# EUROPEAN PATENT SPECIFICATION

(11) **EP 4 711 164 B1**
(45) Date of publication and mention of the grant of the patent: **30.09.2026**
(21) Application number: 25197407.7
(22) Date of filing: 21.08.2025
(51) Int. Cl.: B60J 7/06

(54) **COVERING APPARATUS FOR THE CARGO BED OF A TRUCK, IN PARTICULAR A TIPPER SEMI-TRAILER**
ABDECKVORRICHTUNG FÜR DAS LADEBETT EINES LASTKRAFTWAGENS, INSBESONDERE EINES SATTELAUFLIEGERS
DISPOSITIF DE RECOUVREMENT POUR LA PLATE-FORME DE CHARGEMENT D'UN CAMION, EN PARTICULIER D'UNE SEMI-REMORQUE À BENNE BASCULANTE

(30) Priority: 17.09.2024 IT 202400020677
(43) Date of publication of application: 18.03.2026
(73) Proprietor: Cramaro Holding S.p.A., 37044 Cologna Veneta (Verona) (IT)
(72) Inventor: EDERLE, Riccardo, 37044 COLOGNA VENETA (Verona) (IT)
(74) Representative: Locatelli, Gian Matteo

(56) References cited:
- DE-A1- 102010 003 932
- DE-A1- 102012 216 151

## Description

### TECHNICAL FIELD

The present invention relates to a covering apparatus for the cargo bed of a truck, in particular a tipper semi-trailer.

The invention fits into the technical field of covering systems for the load on means of transport equipped with a tipper semi-trailer.

### PRIOR ART

A tipper semi-trailer is a type of trailer used mainly for transporting loose materials, such as sand, gravel, soil, garbage and other goods that can be easily unloaded by means of a tipping movement of the cargo bed. In particular, the semi-trailer comprises a cargo bed, defining a collection compartment inside which the material to be transported is collected, a tipping mechanism of the cargo bed, generally of the hydraulic type, and a rear hatch, hinged in a top portion of the cargo bed, rotatable to allow the material to exit from the cargo bed.

Semi-trailers further comprise a covering apparatus formed of a covering tarpaulin and an unfolding device operatively associated with the cargo bed to cover or uncover the collection compartment, see documents DE 10 2012 216151 A1 or DE 10 2010 003932 A1.

As is known, automated systems exist that allow automatic unfolding of the tarpaulin to be performed. These systems comprise a plurality of support arches constrained to the covering tarpaulin and slidably mounted on the cargo bed to move the tarpaulin from a folded configuration to an unfolded configuration. In particular, the movement of the support arches is limited by the presence of the hinge that constrains the rear hatch to the cargo bed. Systems have therefore been obtained that have a support element, mounted cantilevered on the last support arch and extending parallel to the direction of movement of the support arches, to which the end portion of the covering tarpaulin is constrained, so as to cover the portion of the cargo bed arranged behind the aforesaid hinge. Disadvantageously, the major encumbrance produced by such a support element during the folded configuration of the tarpaulin heavily limits the space available to allow unloading of the material.

Operators in this sector are constantly looking for new solutions to make the covering apparatuses less cumbersome, so that the operations of loading the material into the cargo bed are facilitated.

### OBJECTS OF THE INVENTION

In this context, an object of the present invention is to provide a covering apparatus for the cargo bed of a truck, in particular a tipper semi-trailer, which is capable of facilitating the operations of loading the material into the cargo bed.

Another object of the present invention is to provide a covering apparatus for the cargo bed of a truck, in particular a tipper semi-trailer, having a marked adaptability.

The objects specified are substantially achieved by a covering apparatus for the cargo bed of a truck, in particular a tipper semi-trailer, comprising the technical features stated in the main claim.

The dependent claims correspond to possible advantageous embodiments of the invention.

### BRIEF DESCRIPTION OF THE DRAWINGS

Further characteristics and advantages of the present invention will emerge more clearly from the indicative, and therefore non-limiting, description of a preferred but not exclusive embodiment of a covering apparatus for the cargo bed of a truck, in particular a tipper semi-trailer, as illustrated in the accompanying drawings, in which:
- figure 1 show a schematic representation of a covering apparatus for the cargo bed of a truck, in particular a tipper semi-trailer, in accordance with an embodiment of the present invention;
- figures 2A-2B, 3A-3B show a partial schematic representation according to several possible embodiments of the covering apparatus for the cargo bed of a truck, in accordance with respective operational configurations.

### DETAILED DESCRIPTION

The present invention relates to a covering apparatus for the cargo bed of a truck, in particular a tipper semi-trailer, which will be indicated below as apparatus 1.

Purely by way of non-limiting example, the apparatus 1 can advantageously be applied to a tipper semi-trailer, a trailer and/or a tractor. The apparatus 1 comprises a covering tarpaulin 2, adapted to cover the containment compartment defined by the cargo bed "C" of a truck, and a device for unfolding 3 the tarpaulin 2.

The unfolding device 3 comprises a succession of arches 4 slidably mounted or mountable on facing walls of the cargo bed "C" (for example, the side walls) and movable between the front end of the cargo bed and an end-of-travel position, interposed between the front end and a rear end of the cargo bed. Generally, the end-of-travel position is arranged at the hinge which constrains the rear hatch to the cargo bed. It is emphasised that, in the present disclosure, front end of the cargo bed and rear end of the cargo bed refers to a normal direction of travel of the truck.

The succession of arches 4 comprises at least a first arch 401, proximal to the front end "C1", and at least a last arch 402 (commonly known also as a double arch, since it generally consists of a pair of reciprocally constrained single arches), distal from the front end "C1".

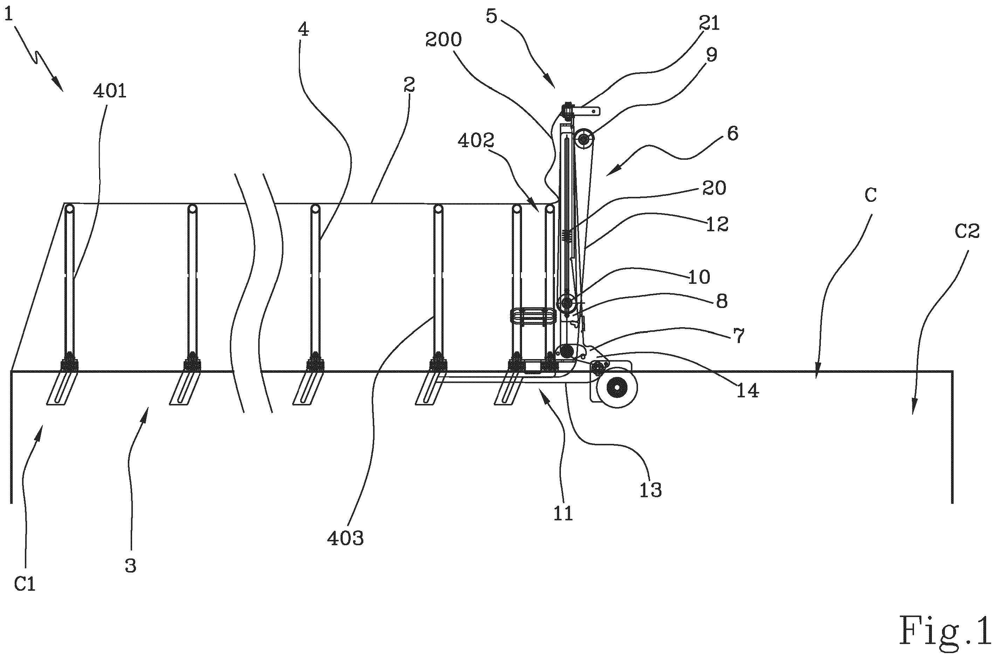

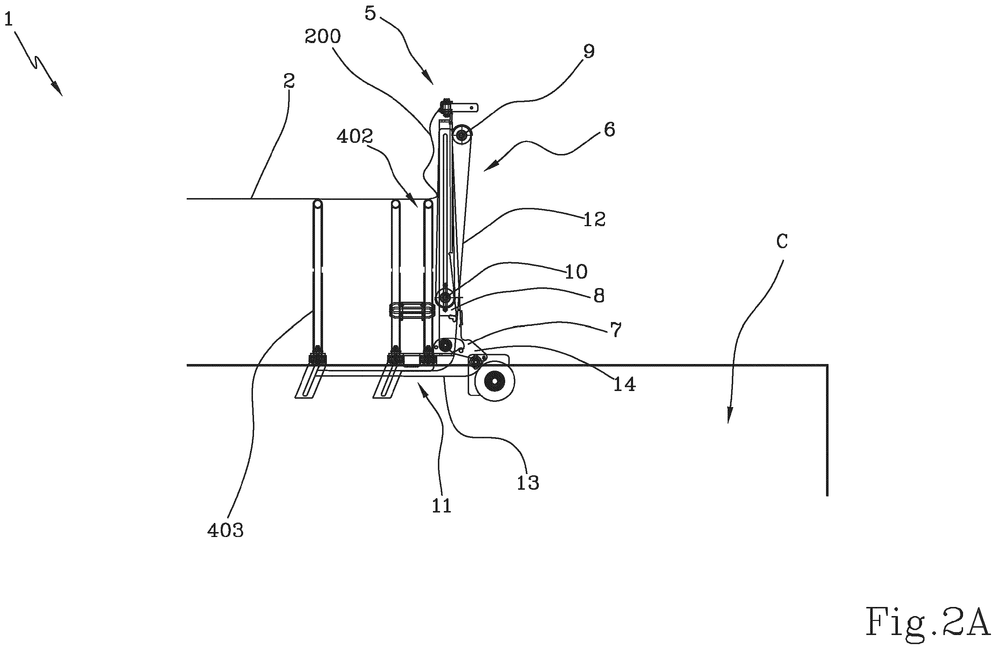

The unfolding device 3 is operatively associated with the tarpaulin 2 to move it reversibly between a rest configuration (not shown in the appended drawings), in which the tarpaulin 2 is arranged substantially fold-up in proximity to the front end of the cargo bed "C", and a partial covering configuration (figs. 1, 2A), in which the tarpaulin 2 is partially unfolded, covering the compartment of the cargo bed "C" from the front end "C1" substantially up to the end-of-travel position.

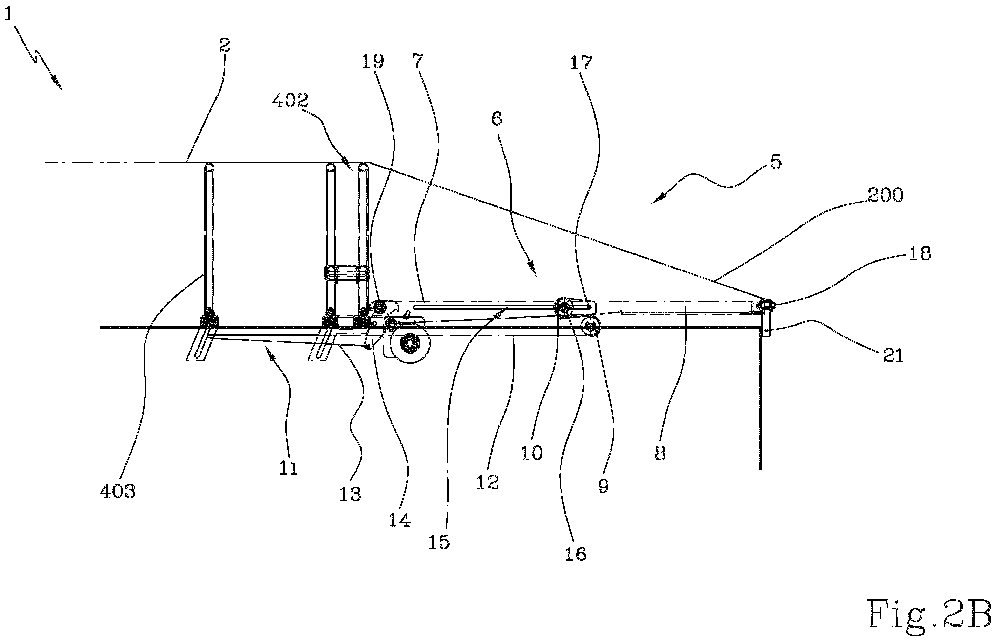

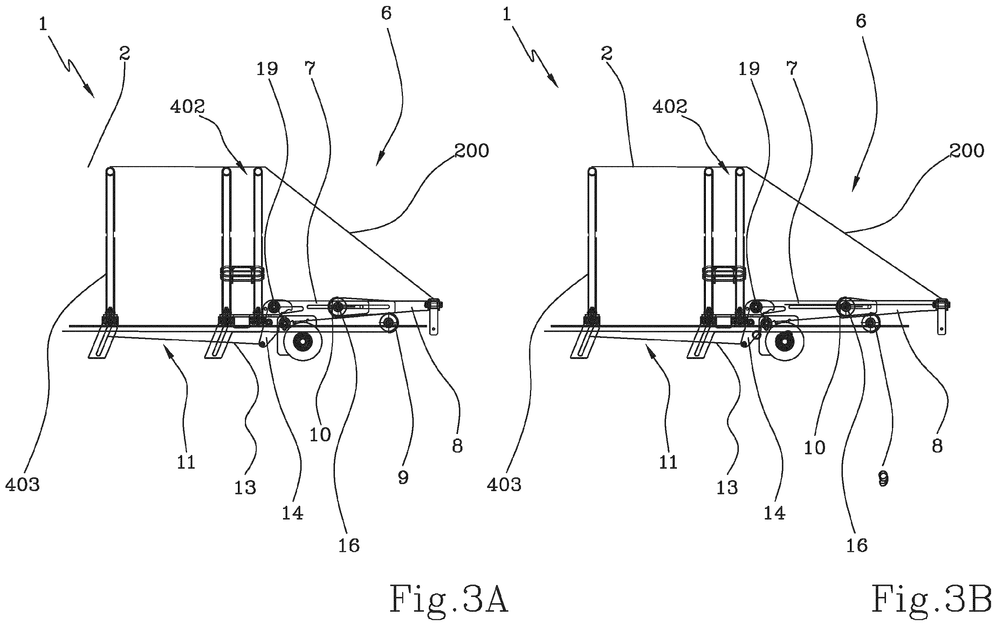

The apparatus 1 comprises an extendible flap 5 operatively associated with an end portion 200 of the tarpaulin 2 to reversibly switch the tarpaulin 2 from the partial covering configuration (figs. 1, 2A) to a full covering configuration (figs. 2B, 3A, 3B), in which the tarpaulin 2 covers the containment compartment of the cargo bed 2 from the front end "C1" to the rear end "C2".

As shown in the appended drawings, the extendible flap 5 comprises a pair of extendible members 6 hinged to respective ends of the last arch 402 of the unfolding device 3. In particular, each extendible member 6 comprises a rotating arm 7 hinged to the last arch of the unfolding device 3 and rotatable between an inactive configuration (figs. 1, 2A), in which the extendible member 6 is arranged transversely, preferably substantially perpendicularly, to a main extension direction of the cargo bed "C", and an operational configuration (figs. 2B, 3A, 3B), in which the rotating arm 7 is arranged substantially parallel to the main extension direction of the cargo bed, in order to obtain a covering of the containment compartment. Furthermore, the extendible member 6 comprises a translating arm 8 telescopically coupled to the rotating arm 7 and constrained to the end portion 200 of the cargo bed 2. The translating arm 8 is reversibly movable with respect to the rotating arm 7 to reversibly switch the end portion 200 of the tarpaulin 2 between a folded condition (figs. 1, 2A), corresponding with a retracted position of the translating arm 8 with respect to the rotating arm 7, and an unfolded condition (figs. 2B, 3A, 3B), corresponding with an extracted position of the translating arm 8 with respect to the rotating arm 7.

In other words, the movement of the translating arm 8 with respect to the rotating arm 7 produces an expansion or a radial contraction of the extendible member 6.

The extendible member 6 further comprises a fixed pulley 9 and a movable pulley 10 mounted respectively on the rotating arm 7 and on the translating arm 8.

Advantageously, the extendible member 6 comprises flexible transmission means 11 having a first portion, constrained to the rotating arm 7, and a second portion, constrained to a penultimate arch 403 of the succession of arches 4 of the unfolding device 3, so that reaching of the end-of-travel position by the last arch causes a tensioning of the flexible transmission means 11 that produces a rotation of the rotating arm from the inactive configuration (figs. 1, 2A) to the operational configuration (figs. 2B, 3A, 3B). Furthermore, the flexible transmission means 11 is slidably associated with the fixed pulley 9 and with the movable pulley 10, so that reaching of the end-of-travel position by the last arch causes a tensioning of the flexible transmission means 11 that produces the sliding of said translating arm 8 from the retracted position (figs. 1, 2A) to the extracted position (figs. 2B, 3A, 3B). In other words, the flexible transmission means 11 allows unfolding of the end portion 200 of the tarpaulin 2 and causes it to cover the end portion of the cargo bed "C" under the towing action imposed by the constraint with the aforesaid succession of arches 4.

In this manner, the extendible flap 5 allows an efficient coverage of the containment compartment to be achieved, guaranteeing, at the same time, reduced overall dimensions in the rest configuration, in which the tarpaulin 2 is folded so as to facilitate the loading operations of the material inside the cargo bed "C". In fact, in the rest position of the tarpaulin 2, each extendible member 6 is arranged in inactive configuration, heavily limiting the encumbrance in a direction parallel to the extension direction of the cargo bed. In other words, the extendible member 6 is aligned along a vertical direction, limiting the overall horizontal dimensions, so as to guarantee a broad operating volume for loading of the truck.

It is further emphasised that, in the inactive configuration of the extendible member 6, the translating arm 8 is arranged in a retracted position, limiting the overall dimensions in the vertical direction and contributing to a better absorption of the vibrational stresses to which the extendible flap 5 is subjected during its operating lifetime. In this configuration, the extendible flap 5 is also substantially protected from aerodynamic stresses, thanks to the presence of the succession of arches 4.

With particular reference to figures 3A-3B, the telescopic coupling of the rotating arm 7 and the translating arm 8 guarantees a marked adaptability of the apparatus 1 to the different design specifications, allowing, for example, adaptation of the apparatus 1 to cargo beds having different distances between the hinge of the hatch and the rear portion of the cargo bed. In this case, the end portion 200 of the covering tarpaulin 2 can be specifically sized and, furthermore, contribute to defining an end-of-travel for sliding of the translating arm 8 that is therefore adapted to the dimensions of the cargo bed.

In accordance with several possible embodiments, the flexible transmission means 11 is constrained and/or has a pre-tensioning such that translation of the translating arm 8 is simultaneous with rotation of the rotating arm 7. Furthermore, several embodiments provide for the two motions of translation and rotation to start at different times, based on the specific operating needs.

In accordance with an advantageous aspect, the flexible transmission means 11 comprises a transmission cord 12 having a first end, constrained to the rotating arm 7, and a second end, constrained to the penultimate arch 403 of the succession of arches 4. The cord 12 is slidably associated with the fixed pulley 9 and with the movable pulley 10, so that reaching of the end-of-travel position by the last arch 402 causes a tensioning of the cord 12 that produces the sliding of the translating arm 8 from the retracted position to the extracted position.

Preferably, the cord 12 is slidably associated with the fixed pulley 9 and with the movable pulley 10, defining an "S-shaped" winding. In particular, sliding of the translating arm 8 from the retracted position to the extracted position causes an approach of the movable pulley 10 to said fixed pulley 9. Furthermore, sliding of the translating arm 8 from the extracted position to the retracted position causes a distancing of the movable pulley 10 from the fixed pulley 9.

**In** accordance with an advantageous aspect, the transmission cord 12 can be elastic, so as to absorb sudden peaks in traction, reducing the risk of damage to the extendible flap 5. Furthermore, the flexible transmission means 11 can comprise an elastic element (not shown in the appended figures), for example a spring, adapted to constrain the second end of the transmission cord 12 to the penultimate arch 403. **In** other words, the elastic element can be interposed between the second end of the transmission cord 12 and the penultimate arch 403, for example, to absorb the sudden peaks in traction, reducing the risk of damage to the extendible flap 5.

According to a further advantageous aspect, the flexible transmission means 11 comprises a transmission chain 13 having a first end, constrained to the rotating arm 7, and a second end, constrained to the penultimate arch 403 of the succession of arches 4, so that reaching of the end-of-travel position by the last arch 402 causes a tensioning of the chain 13 that produces a rotation of the rotating arm 7 from the inactive configuration to the operational configuration. With particular reference to figures 1, 2A, the last arch 402 has not yet reached the end-of-travel position and, therefore, the chain 13 is in a loose or lower tensioning state. With reference to figures 2B, 3A, 3B, the last arch 402 has reached the end-of-travel position and, therefore, the chain 13 is in a tensioning state. **In** accordance with an embodiment, the rotating arm 7 has a connection portion 14 extending along a transverse direction to the main extension direction of the rotating arm 7 and configured to allow connection of the chain 13 to the rotating arm 7.

Alternatively, the transmission chain 13 cannot be provided and the cord 12, following tensioning, can produce a rotation of the rotating arm 7 from the inactive configuration to the operational configuration.

In accordance with a possible embodiment, the rotating arm 7 has a sliding guide 15 extending parallel to a main extension direction thereof. Furthermore, the translating arm 8 comprises a first pin 16 and a second pin 17 inserted inside the guide 15 to slidably couple the translating arm 7 and the rotating arm 8. As shown in the figures, the first pin 16 defines the rotation axis of the movable pulley 10 and the second pin 17 contributes to defining an end-of-travel for movement of the translating arm 8 with respect to the rotating arm 7. For example, the first pin 16 and/or the second pin 17 can be made in a single piece with the translating arm 8. Alternatively, the first pin 16 and/or the second pin 17 can be mounted on the translating arm 8 by means of threaded coupling means, thus allowing alteration of the length of the path of translation of the translating arm 8 with respect to the rotating arm 7, adapting it to the dimensions of the portion of the cargo bed to be covered and/or the dimensions of the tarpaulin 2.

With reference to the examples shown in the figures, the translating arm 8 extends along a longitudinal axis between a first end, at which said first pin 16 is arranged, and a second end connected to the tarpaulin 2. Furthermore, the second pin 17 is interposed between the first pin 16 and the second end of the translating arm 8. The rotating arm 7 also extends longitudinally between a first end, hinged to the last arch 402 of the unfolding device 3, and a second end, opposite to the first end and on which the fixed pulley 9 is mounted.

According to a further advantageous aspect, the extendible flap 5 comprises a connection crossbar 18 connected to the translating arms 8 and constrained to the end portion 200 of the tarpaulin 2 to connect it to the pair of extendible members 6. **In** particular, the connection crossbar 18 allows the extendible members 6 to be kinematically coupled, keeping them substantially parallel during movement.

According to a further advantageous aspect, the apparatus 1 advantageously comprises a return spring, preferably a torsion spring 19, active between the extendible member 6 and the last arch 402 to move the rotating arm 7 from the operational configuration to the inactive configuration.

With particular reference to figure 1, the apparatus 1 can comprise a return spring 20 active between the translating arm 8 and the rotating arm 7 to move the translating arm 8 from the extracted position to the retracted position. Alternatively, the return spring 20 cannot be provided and the return of the translating arm 8 from the extracted position to the retracted position can be entrusted solely to the force of gravity acting on the translating arm 8 and, where present, on the crossbar 18.

With reference to the examples shown in the figures, the apparatus 1 can comprise a constraining element 21 mounted on the translating arm 8 and/or on the crossbar 18 and configured to constrain an end portion of the tarpaulin 2 to the extendible flap 5.

In accordance with an even more advantageous embodiment, the apparatus 1 comprises movement means (not shown in the appended figures), for example a chain or belt, configured to reversibly move the aforesaid succession of arches 4 along the cargo bed "C", allowing unfolding and complete covering of the cargo bed "C" of the truck in a fully automated manner. For example, the movement means comprises a towing pulley and an idle pulley mounted respectively in proximity to the front end "C1" and the rear end "C2" of the cargo bed "C" or the aforesaid end-of-travel position. In particular, the towing pulley is motorised. Furthermore, the movement means comprises a towing cable operatively associated with the towing pulley and with the idle pulley. The towing cable is constrained to the last arch 402 of the succession of arches 4 at a constraining portion, in order to slidably and reversibly move the succession of arches 4 along the cargo bed "C". In particular, the movement of the last arch 402 towards the rear end "C2" of the cargo bed causes sliding of the succession of arches 4 towards the rear end "C2" of the cargo bed "C" under the towing action imposed by the tarpaulin 2 in the unfolding step. In contrast, the movement of the last arch 402 towards the front end "C1" of the cargo bed "C" causes sliding of the succession of arches 4 towards the front end "C1" of the cargo bed "C" under the pushing action imposed on the succession of arches 4 by said last arch 402.

## Claims

1. A covering apparatus (1) for the cargo bed of a truck, in particular a tipper semi-trailer, comprising:
- a covering tarpaulin (2) adapted to cover the containment compartment defined by the cargo bed of a truck;
- a device for unfolding (3) the tarpaulin (2) comprising a succession of arches (4) slidably mountable on facing walls of the cargo bed and movable between a front end (C1) of the cargo bed and an end-of-travel position, interposed between the front end (C1) and a rear end (C2) of the cargo bed (C); said succession of arches (4) comprising at least a first arch (401), proximal to the front end, and at least a last arch (402), distal from the front end;
wherein the unfolding device (3) is operatively associated with the tarpaulin (2) to move it reversibly between a rest configuration, in which the tarpaulin (2) is arranged substantially fold-up in proximity to the front end of the cargo bed, and a partial covering configuration, in which the tarpaulin (2) is partially unfolded, covering the compartment of the cargo bed from the front end substantially up to the end-of-travel position;
- an extendible flap (5) operatively associated with an end portion (200) of the tarpaulin (2) to reversibly switch the tarpaulin (2) from said partial covering configuration to a full covering configuration, in which the tarpaulin (2) covers the compartment of the cargo bed from the front end to the rear end; wherein said extendible flap (5) comprises a pair of members (6) hinged to the respective ends of the last arch (402) of the unfolding device (3), each member comprising
- a rotating arm (7) hinged to the last arch (402) of the unfolding device (3), said rotating arm (7) being rotatable between an inactive configuration, in which the member is arranged substantially perpendicular to a main extension direction of the cargo bed, and an operational configuration, in which the rotating arm (7) is arranged substantially parallel to the main extension direction of the cargo bed, in order to obtain a covering of the cargo bed compartment;
the member (6) being **characterised by**
the member (6) being an extendible member;
- a translating arm (8) telescopically coupled to said rotating arm (7) and constrained to said end portion of the tarpaulin (2), said translating arm (8) being reversibly movable with respect to said rotating arm (7) to reversibly switch said end portion of the tarpaulin (2) between a folded condition, corresponding with a retracted position of said translating arm (8) with respect to said rotating arm (7), and an unfolded condition, corresponding with an extracted position of said translating arm (8) with respect to said rotating arm (7);
- a fixed pulley (9) and a movable pulley (10) mounted respectively on the rotating arm (7) and on the translating arm (8);
- flexible transmission means (11) having a first portion, constrained to said rotating arm (7), and a second portion, constrained to a penultimate arch (403) of said succession of arches (4) of the unfolding device (3), so that reaching of the end-of-travel position by the last arch (402) causes a tensioning of the flexible transmission means (11) that produces a rotation of the rotating arm (7) from the inactive configuration to the operational configuration; and wherein the flexible transmission means (11) is slidably associated with the fixed pulley (9) and with the movable pulley (10), so that reaching of the end-of-travel position by the last arch (402) causes a tensioning of the flexible transmission means (11) that produces the sliding of said translating arm (8) from the retracted position to the extracted position.

2. The covering apparatus in accordance with claim 1, wherein said flexible transmission means (11) comprises a transmission cord (12) having a first end, constrained to said rotating arm (7), and a second end, constrained to the penultimate arch (403) of said succession of arches (4); and wherein said cord (12) is slidably associated with the fixed pulley (9) and with the movable pulley (10) so that reaching of the end-of-travel position by the last arch (402) causes a tensioning of the cord (12) that causes the sliding of said translating arm (8) from the retracted position to the extracted position.

3. The covering apparatus in accordance with claim 2, wherein said cord (12) is slidably associated with the fixed pulley (9) and with the movable pulley (10) defining an "S-shaped" winding; wherein the sliding of said translating arm (8) from the retracted position to the extracted position causes an approach of said movable pulley (10) to said fixed pulley (9); and wherein the sliding of said translating arm (8) from the extracted position to the retracted position causes a distancing of said movable pulley (10) from said fixed pulley (9).

4. The covering apparatus in accordance with claim 2 or 3, wherein said cord (12) is elastic.

5. The covering apparatus in accordance with one or more of the preceding claims, wherein said flexible transmission means (11) comprises a transmission chain (13) having a first end, constrained to said rotating arm (7), and a second end, constrained to the penultimate arch (403) of said succession of arches (4), so that reaching of the end-of-travel position by the last arch (402) causes a tensioning of the chain (13) that produces a rotation of the rotating arm (7) from the inactive configuration to the operational configuration.

6. The covering apparatus in accordance with one or more of the preceding claims, wherein the rotating arm (7) has a sliding guide (15) extending parallel to a main extension direction of said rotating arm (7); and wherein the translating arm (8) comprises a first pin (16) and a second pin (17) inserted inside said guide (15) to slidably couple said translating arm (8) and said rotating arm (7).

7. The covering apparatus in accordance with claim 6, wherein said translating arm (8) extends along a longitudinal axis between a first end, at which said first pin (16) is arranged, and a second end connected to said tarpaulin (2); said first pin (16) defining a rotation axis of said movable pulley (10).

8. The covering apparatus in accordance with one or more of the preceding claims, wherein said rotating arm (7) extends longitudinally between a first end, hinged to the last arch (402) of the unfolding device (3), and a second end, opposite to said first end; said fixed pulley (9) being mounted on said rotating arm (7) at said second end.

9. The covering apparatus in accordance with one or more of the preceding claims, wherein said extendible flap (5) comprises a connection crossbar (18) connected to said translating arms and constrained to said end portion of the tarpaulin (2) to connect said end portion of the tarpaulin (2) to said pair of extendible members (6).

10. The covering apparatus in accordance with one or more of the preceding claims, comprising a return spring, preferably a torsion spring (19), active between said extendible member (6) and said last arch (402) to move said rotating arm (7) from said operational configuration to said inactive configuration.

11. The covering apparatus in accordance with one or more of the preceding claims, comprising a return spring (20), active between said translating arm (8) and said rotating arm (7) to move said translating arm (8) from said extracted position to said retracted position.

12. The covering apparatus in accordance with one or more of the preceding claims, comprising movement means configured to reversibly move the aforesaid succession of arches (4) along the cargo bed (C), said movement means comprising:
- a towing pulley and an idler pulley mounted respectively in proximity to said front end (C1) and said rear end (C2) of the cargo bed (C) or of said end-of-travel position, said towing pulley being a motorised pulley;
- a towing rope operatively associated with said towing pulley and said idler pulley, said towing rope being constrained to said last arch (402) of said succession of arches (4) at a constraining portion to slidably move in a reversible manner said succession of arches (4) along said cargo bed (C).

## Patentansprüche

1. Abdeckvorrichtung (1) für das Ladebett eines Lastkraftwagens, insbesondere eines Kippsattelaufliegers, umfassend:
- eine Abdeckplane (2), die dazu angepasst ist, die durch das Ladebett eines Lastkraftwagens definierten Aufnahmeunterteilung abzudecken;
- eine Vorrichtung zum Auffalten (3) der Plane (2), die eine Abfolge von Bögen (4) umfasst, die verschiebbar an sich zugewandten Wänden des Ladebetts montierbar und zwischen einem vorderen Ende (C1) des Ladebetts und einer Endhubposition bewegbar sind, die zwischen dem vorderen Ende (C1) und einem hinteren Ende (C2) des Ladebetts (C) eingefügt ist; wobei die Abfolge von Bögen (4) mindestens einen ersten Bogen (401) nahe dem vorderen Ende und mindestens einen letzten Bogen (402) distal vom vorderen Ende umfasst;
wobei die Auffaltvorrichtung (3) betriebswirksam mit der Plane (2) assoziiert ist, um diese reversibel zwischen einer Ruhekonfiguration, in der die Plane (2) im Wesentlichen zusammengefaltet in der Nähe des vorderen Endes des Ladebetts angeordnet ist, und einer teilweisen Abdeckungskonfiguration, in der die Plane (2) teilweise aufgefaltet ist und die Unterteilung des Ladebetts vom vorderen Ende im Wesentlichen bis zur Endhubposition abdeckt, zu bewegen;
- eine ausfahrbare Klappe (5), die betriebswirksam mit einem Endabschnitt (200) der Plane (2) assoziiert ist, um die Plane (2) reversibel von der teilweisen Abdeckungskonfiguration in eine vollständige Abdeckungskonfiguration zu wechseln, in der die Plane (2) die Unterteilung des Ladebetts vom vorderen Ende bis zum hinteren Ende abdeckt; wobei die ausfahrbare Klappe (5) ein Paar von Elementen (6) umfasst, die an den jeweiligen Enden des letzten Bogens (402) der Auffaltvorrichtung (3) angelenkt sind, wobei jedes Element Folgendes umfasst:
- einen Dreharm (7), der am letzten Bogen (402) der Auffaltvorrichtung (3) angelenkt ist, wobei der Dreharm (7) zwischen einer inaktiven Konfiguration, in der das Element im Wesentlichen senkrecht zu einer Haupterstreckungsrichtung des Ladebetts angeordnet ist, und einer Betriebskonfiguration, in der der Dreharm (7) im Wesentlichen parallel zur Haupterstreckungsrichtung des Ladebetts angeordnet ist, drehbar ist, um eine Abdeckung der Ladebettunterteilung zu erhalten;
wobei das Element (6) **dadurch gekennzeichnet ist, dass** das Element (6) ein ausfahrbares Element ist;
- einen Translationsarm (8), der teleskopisch mit dem Dreharm (7) gekoppelt und am Endabschnitt der Plane (2) befestigt ist, wobei der Translationsarm (8) in Bezug auf den Dreharm (7) reversibel bewegbar ist, um den Endabschnitt der Plane (2) reversibel zwischen einem gefalteten Zustand, der einer zurückgezogenen Position des Translationsarms (8) in Bezug auf den Dreharm (7) entspricht, und einem aufgefalteten Zustand, der einer ausgezogenen Position des Translationsarms (8) in Bezug auf den Dreharm (7) entspricht, zu wechseln;
- eine feststehende Seilrolle (9) und eine bewegbare Seilrolle (10), die jeweils am Dreharm (7) und am Translationsarm (8) montiert sind;
- flexible Übertragungsmittel (11) mit einem ersten Abschnitt, der am Dreharm (7) befestigt ist, und einem zweiten Abschnitt, der an einem vorletzten Bogen (403) der Abfolge von Bögen (4) der Auffaltvorrichtung (3) befestigt ist, sodass das Erreichen der Endhubposition durch den letzten Bogen (402) eine Spannung der flexiblen Übertragungsmittel (11) verursacht, die ein Drehen des Dreharms (7) von der inaktiven Konfiguration in die Betriebskonfiguration erzeugt; und wobei die flexible Übertragungsmittel (11) verschiebbar mit der feststehenden Seilrolle (9) und mit der bewegbaren Seilrolle (10) assoziiert sind, sodass das Erreichen der Endhubposition durch den letzten Bogen (402) eine Spannung der flexiblen Übertragungsmittel (11) verursacht, die das Verschieben des Translationsarms (8) von der zurückgezogenen Position in die ausgezogene Position erzeugt.

2. Abdeckvorrichtung nach Anspruch 1, wobei die flexible Übertragungsmittel (11) ein Übertragungsseil (12) umfassen, das ein erstes Ende, das am Dreharm (7) befestigt ist, und ein zweites Ende aufweist, das am vorletzten Bogen (403) der Abfolge von Bögen (4) befestigt ist; und wobei das Seil (12) verschiebbar mit der feststehenden Seilrolle (9) und mit der bewegbaren Seilrolle (10) assoziiert ist, sodass das Erreichen der Endhubposition durch den letzten Bogen (402) eine Spannung des Seils (12) verursacht, die das Verschieben des Translationsarms (8) von der zurückgezogenen Position in die ausgezogene Position verursacht.

3. Abdeckvorrichtung nach Anspruch 2, wobei das Seil (12) verschiebbar mit der feststehenden Seilrolle (9) und der bewegbaren Seilrolle (10) assoziiert ist, wodurch eine "S-förmigen" Wicklung definiert wird; wobei das Verschieben des Translationsarms (8) von der zurückgezogenen Position in die ausgezogene Position eine Annäherung der bewegbaren Seilrolle (10) an die feststehende Seilrolle (9) verursacht;
und wobei das Verschieben des Translationsarms (8) von der ausgezogenen Position in die zurückgezogene Position verursacht, dass sich die bewegbare Seilrolle (10) von der feststehenden Seilrolle (9) entfernt.

4. Abdeckvorrichtung nach Anspruch 2 oder 3, wobei das Seil (12) elastisch ist.

5. Abdeckvorrichtung nach einem oder mehreren der vorhergehenden Ansprüche, wobei die flexible Übertragungsmittel (11) eine Übertragungskette (13) umfassen, die ein erstes Ende, das am Dreharm (7) befestigt ist, und ein zweites Ende aufweist, das am vorletzten Bogen (403) der Abfolge von Bögen (4) befestigt ist, sodass das Erreichen der Endhubposition durch den letzten Bogen (402) eine Spannung der Kette (13) verursacht, die ein Drehen des Dreharms (7) von der inaktiven Konfiguration in die Betriebskonfiguration erzeugt.

6. Abdeckvorrichtung nach einem oder mehreren der vorhergehenden Ansprüche, wobei der Dreharm (7) eine Schiebeführung (15) aufweist, die sich parallel zu einer Haupterstreckungsrichtung des Dreharms (7) erstreckt; und wobei der Translationsarm (8) einen ersten Zapfen (16) und einen zweiten Zapfen (17) umfasst, die in die Führung (15) eingeführt sind, um den Translationsarm (8) und den Dreharm (7) verschiebbar miteinander zu koppeln.

7. Abdeckvorrichtung nach Anspruch 6, wobei sich der Translationsarm (8) entlang einer Längsachse zwischen einem ersten Ende, an dem der erste Zapfen (16) angeordnet ist, und einem zweiten Ende, das mit der Plane (2) verbunden ist, erstreckt; wobei der erste Zapfen (16) eine Drehachse der bewegbaren Seilrolle (10) definiert.

8. Abdeckvorrichtung nach einem oder mehreren der vorhergehenden Ansprüche, wobei sich der Dreharm (7) in Längsrichtung zwischen einem ersten Ende, das am letzten Bogen (402) der Auffaltvorrichtung (3) angelenkt ist, und einem dem ersten Ende gegenüberliegenden zweiten Ende erstreckt; wobei die feststehende Seilrolle (9) am Dreharm (7) am zweiten Ende montiert ist.

9. Abdeckvorrichtung nach einem oder mehreren der vorhergehenden Ansprüche, wobei die ausfahrbare Klappe (5) eine Verbindungsquerstange (18) umfasst, die mit den Translationsarmen verbunden und am Endabschnitt der Plane (2) befestigt ist, um den Endabschnitt der Plane (2) mit dem Paar von ausfahrbaren Elementen (6) zu verbinden.

10. Abdeckvorrichtung nach einem oder mehreren der vorhergehenden Ansprüche, umfassend eine Rückholfeder, vorzugsweise eine Torsionsfeder (19), die zwischen dem ausfahrbaren Element (6) und dem letzten Bogen (402) wirkt, um den Dreharm (7) von der Betriebskonfiguration in die inaktive Konfiguration zu bewegen.

11. Abdeckvorrichtung nach einem oder mehreren der vorhergehenden Ansprüche, umfassend eine Rückholfeder (20), die zwischen dem Translationsarm (8) und dem Dreharm (7) wirkt, um den Translationsarm (8) von der ausgezogenen Position in die zurückgezogene Position zu bewegen.

12. Abdeckvorrichtung nach einem oder mehreren der vorhergehenden Ansprüche, umfassend Bewegungsmittel, die so ausgelegt sind, dass sie die vorgenannte Abfolge von Bögen (4) entlang des Ladebetts (C) reversibel bewegen, wobei die Bewegungsmittel Folgendes umfassen:
- eine Zugrolle und eine Laufrolle, die jeweils in der Nähe des vorderen Endes (C1) und des hinteren Endes (C2) des Ladebetts (C) oder der Endhubposition montiert sind, wobei die Zugrolle eine motorisierte Seilrolle ist;
- ein Zugseil, das betriebswirksam mit der Zugrolle und der Laufrolle assoziiert ist, wobei das Zugseil am letzten Bogen (402) der Abfolge von Bögen (4) an einem Befestigungsabschnitt befestigt ist, um die Abfolge von Bögen (4) entlang des Ladebetts (C) auf reversierbare Weise verschiebbar zu bewegen.

## Revendications

1. Dispositif de recouvrement (1) pour la plate-forme de chargement d'un camion, en particulier d'une semi-remorque à benne basculante, comprenant :
- une bâche de recouvrement (2) adaptée pour recouvrir le compartiment de confinement défini par la plate-forme de chargement d'un camion ;
- un dispositif pour déplier (3) la bâche (2) comprenant une succession d'arceaux (4) montés de manière coulissante sur des parois opposées de la plate-forme de chargement et mobiles entre une extrémité avant (C1) de la plate-forme de chargement et une position de fin de course, interposée entre l'extrémité avant (C1) et une extrémité arrière (C2) de la plate-forme de chargement (C) ; ladite succession d'arceaux (4) comprenant au moins un premier arceau (401), proximal à l'extrémité avant, et au moins un dernier arceau (402), distal à l'extrémité avant ;
dans lequel le dispositif de dépliage (3) est associé de manière opérationnelle à la bâche (2) pour la déplacer de manière réversible entre une configuration de repos, dans laquelle la bâche (2) est agencée substantiellement repliée à proximité de l'extrémité avant de la plate-forme de chargement, et une configuration de recouvrement partiel, dans laquelle la bâche (2) est partiellement dépliée, recouvrant le compartiment de la plate-forme de chargement de l'extrémité avant substantiellement jusqu'à la position de fin de course ;
- un volet extensible (5) associé de manière opérationnelle à une portion d'extrémité (200) de la bâche (2) pour faire passer de manière réversible la bâche (2) de ladite configuration de recouvrement partiel à une configuration de recouvrement complet, dans laquelle la bâche (2) recouvre le compartiment de la plate-forme de chargement de l'extrémité avant à l'extrémité arrière ; dans lequel ledit volet extensible (5) comprend une paire d'éléments (6) articulés aux extrémités respectives du dernier arceau (402) du dispositif de dépliage (3), chaque élément comprenant :
- un bras rotatif (7) articulé sur le dernier arceau (402) du dispositif de dépliage (3), ledit bras rotatif (7) pouvant tourner entre une configuration inactive, dans laquelle l'élément est agencé substantiellement perpendiculairement à une direction d'extension principale de la plate-forme de chargement, et une configuration opérationnelle, dans laquelle le bras rotatif (7) est agencé substantiellement parallèlement à la direction d'extension principale de la plate-forme de chargement, afin d'obtenir un recouvrement du compartiment de la plate-forme de chargement ;
l'élément (6) étant **caractérisé par** l'élément (6) étant un élément extensible ;
- un bras de translation (8) couplé de manière télescopique audit bras rotatif (7) et contraint à ladite portion d'extrémité de la bâche (2), ledit bras de translation (8) étant mobile de manière réversible par rapport audit bras rotatif (7) pour commuter de manière réversible ladite portion d'extrémité de la bâche (2) entre un état plié, correspondant à une position rétractée dudit bras de translation (8) par rapport audit bras rotatif (7), et un état déplié, correspondant à une position extraite dudit bras de translation (8) par rapport audit bras rotatif (7) ;
- une poulie fixe (9) et une poulie mobile (10) montées respectivement sur le bras rotatif (7) et sur le bras de translation (8) ;
- des moyens de transmission flexibles (11) ayant une première portion, contrainte audit bras rotatif (7), et une seconde portion, contrainte à un avant-dernier arceau (403) de ladite succession d'arceaux (4) du dispositif de dépliage (3), de sorte que l'atteinte de la position de fin de course par le dernier arceau (402) provoque une tension des moyens de transmission flexibles (11) qui produit une rotation du bras rotatif (7) de la configuration inactive à la configuration opérationnelle ; et dans lequel les moyens de transmission flexibles (11) sont associés de manière coulissante à la poulie fixe (9) et à la poulie mobile (10), de sorte que l'atteinte de la position de fin de course par le dernier arceau (402) provoque une tension des moyens de transmission flexibles (11) qui produit le coulissement dudit bras de translation (8) de la position rétractée à la position extraite.

2. Dispositif de recouvrement selon la revendication 1, dans lequel lesdits moyens de transmission flexibles (11) comprennent un cordon de transmission (12) ayant une première extrémité, contrainte audit bras rotatif (7), et une seconde extrémité, contrainte à l'avant-dernier arceau (403) de ladite succession d'arceaux (4) ; et dans lequel ledit cordon (12) est associé de manière coulissante à la poulie fixe (9) et à la poulie mobile (10) de sorte que l'atteinte de la position de fin de course par le dernier arceau (402) provoque une tension du cordon (12) qui provoque le coulissement dudit bras de translation (8) de la position rétractée à la position extraite.

3. Dispositif de recouvrement selon la revendication 2, dans lequel ledit cordon (12) est associé de manière coulissante à la poulie fixe (9) et à la poulie mobile (10) définissant un enroulement en « forme de S » ; dans lequel le coulissement dudit bras de translation (8) de la position rétractée à la position extraite provoque un rapprochement de ladite poulie mobile (10) vers ladite poulie fixe (9) ;
et dans lequel le coulissement dudit bras de translation (8) de la position extraite à la position rétractée provoque un éloignement de ladite poulie mobile (10) de ladite poulie fixe (9).

4. Dispositif de recouvrement selon la revendication 2 ou 3, dans lequel ledit cordon (12) est élastique.

5. Dispositif de recouvrement selon une ou plusieurs des revendications précédentes, dans lequel lesdits moyens de transmission flexibles (11) comprennent une chaîne de transmission (13) ayant une première extrémité, contrainte audit bras rotatif (7), et une seconde extrémité, contrainte à l'avant-dernier arceau (403) de ladite succession d'arceaux (4), de sorte que l'atteinte de la position de fin de course par le dernier arceau (402) provoque une tension de la chaîne (13) qui produit une rotation du bras rotatif (7) de la configuration inactive à la configuration opérationnelle.

6. Dispositif de recouvrement selon une ou plusieurs des revendications précédentes, dans lequel le bras rotatif (7) comporte un guide coulissant (15) s'étendant parallèlement à une direction d'extension principale dudit bras rotatif (7) ; et dans lequel le bras de translation (8) comprend un premier pivot (16) et un second pivot (17) insérés à l'intérieur dudit guide (15) pour coupler de manière coulissante ledit bras de translation (8) et ledit bras rotatif (7).

7. Dispositif de recouvrement selon la revendication 6, dans lequel ledit bras de translation (8) s'étend le long d'un axe longitudinal entre une première extrémité, au niveau de laquelle ledit premier pivot (16) est agencé, et une seconde extrémité reliée à ladite bâche (2) ; ledit premier pivot (16) définissant un axe de rotation de ladite poulie mobile (10).

8. Dispositif de recouvrement selon une ou plusieurs des revendications précédentes, dans lequel ledit bras rotatif (7) s'étend longitudinalement entre une première extrémité, articulée au dernier arceau (402) du dispositif de dépliage (3), et une seconde extrémité, opposée à ladite première extrémité ; ladite poulie fixe (9) étant montée sur ledit bras rotatif (7) à ladite seconde extrémité.

9. Dispositif de recouvrement selon une ou plusieurs des revendications précédentes, dans lequel ledit volet extensible (5) comprend une barre transversale de connexion (18) reliée auxdits bras de translation et contrainte à ladite portion d'extrémité de la bâche (2) pour relier ladite portion d'extrémité de la bâche (2) à ladite paire d'éléments extensibles (6).

10. Dispositif de recouvrement selon une ou plusieurs des revendications précédentes, comprenant un ressort de rappel, de préférence un ressort de torsion (19), actif entre ledit élément extensible (6) et ledit dernier arceau (402) pour déplacer ledit bras rotatif (7) de ladite configuration opérationnelle à ladite configuration inactive.

11. Dispositif de recouvrement selon une ou plusieurs des revendications précédentes, comprenant un ressort de rappel (20), actif entre ledit bras de translation (8) et ledit bras rotatif (7) pour déplacer ledit bras de translation (8) de ladite position extraite à ladite position rétractée.

12. Dispositif de recouvrement selon l'une ou plusieurs des revendications précédentes, comprenant des moyens de déplacement configurés pour déplacer de manière réversible la succession d'arceaux (4) susmentionnée le long de la plate-forme de chargement (C), lesdits moyens de déplacement comprenant :
- une poulie de traction et une poulie folle montées respectivement à proximité de ladite extrémité avant (C1) et de ladite extrémité arrière (C2) de la plate-forme de chargement (C) ou de ladite position de fin de course, ladite poulie de traction étant une poulie motorisée ;
- un câble de traction associé de manière opérationnelle à ladite poulie de traction et à ladite poulie folle, ledit câble de traction étant contraint audit dernier arceau (402) de ladite succession d'arceaux (4) au niveau d'une portion de contrainte pour déplacer de manière coulissante de manière réversible ladite succession d'arceaux (4) le long de ladite plate-forme de chargement (C).
